# EUROPÄISCHE PATENTSCHRIFT

(11) **EP 3 844 027 B1**
(45) Veröffentlichungstag und Bekanntmachung des Hinweises auf die Patenterteilung: **15.03.2023**
(21) Anmeldenummer: 19750061.4
(22) Anmeldetag: 19.07.2019
(51) Int. Cl.: B60Q 1/26, F21S 43/20, F21S 43/33, F21S 41/50, F21S 41/275, F21S 41/37, G09F 13/16, G09F 19/16, G03H 1/08, G02B 5/18, F21S 43/241, G03H 1/00, F21W 104/00

(54) **KRAFTFAHRZEUGSCHEINWERFER MIT DIFFRAKTIVEN OPTISCHEN ELEMENTEN**
MOTOR VEHICLE HEADLAMP WITH DIFFRACTIVE OPTICAL ELEMENTS
PHARES DE VÉHICULES AUTOMOBILE À ÉLÉMENTS OPTIQUES DIFFRACTIFS

(30) Priorität: 31.08.2018 EP 18191897
(43) Veröffentlichungstag der Anmeldung: 07.07.2021
(73) Patentinhaber: ZKW Group GmbH, 3250 Wieselburg (AT)
(72) Erfinder: GÜRTL, Josef, 3233 Kilb (AT)
(74) Vertreter: Patentanwaltskanzlei Matschnig & Forsthuber OG
(86) Internationale Anmeldenummer: PCT/EP2019/069492
(87) Internationale Veröffentlichungsnummer: WO 2020/043391

(56) Entgegenhaltungen:
- EP-A2- 1 500 871
- DE-A1-102009 021 354
- DE-A1-102015 115 128
- DE-A1-102017 206 881
- DE-U1-202017 104 097
- FR-A1- 2 949 725
- JP-A- H1 031 909
- US-A1- 2017 184 270

## Beschreibung

Die Erfindung betrifft einen Kraftfahrzeugscheinwerfer mit zumindest einer Beleuchtungsformungseinheit zur Erzeugung von zumindest einer Lichtverteilung und zumindest einem Bauteil, der diffraktive optische Elemente umfasst. Die Erfindung betrifft ferner ein Kraftfahrzeug, umfassend einen solchen Kraftfahrzeugscheinwerfer.

Diffraktive optische Elemente zur Erzeugung von optischen Effekten, z.B. Farbeffekten oder holografischen Farbeffekten, sind hinlänglich bekannt und dienen häufig als Sicherheitsmerkmale zur Identifikation und Authentifizierung der Herkunft von Ausweisdokumenten, Kreditkarten, Sicherheits- und Wertdokumenten wie Banknoten und von anderen kommerziellen zu schützenden Waren wie Zigarettenpackungen oder Kosmetika bzw. sollen sie ein Kopieren, Fälschen oder eine Manipulation der vorgenannten Gegenstände erschweren oder weitestgehend verhindern. Häufig erfüllen solche diffraktiven optischen Elemente neben der Gewährleistung der Echtheit auch den Zweck, eine ansprechende dekorative Wirkung (Designwirkung) auf den Betrachter auszuüben oder diesem eine Werbebotschaft zu übermitteln.

Diffraktive optische Elemente kommen auch in der Kraftfahrzeugscheinwerfertechnik zur Anwendung. Sie finden beispielsweise in Form von diffraktiven Oberflächen Verwendung, um die Lichtfunktion des Scheinwerfers zu beeinflussen, beispielsweise um eine vorgegebene Lichtverteilung oder ein gewünschtes Ausleuchtmuster zu erzeugen, das Lichtbild (z.B. die Hell-Dunkel-Grenze) zu beeinflussen, oder Scheinwerferlinsen zu achromatisieren. Derartige Anwendungen sind beispielsweise in der DE102014118308A1, der DE60130233T2, der EP2372236A1, der DE102014112937A1, der EP0879990A1, der EP0584545A1 und der WO2016101948A1 beschrieben.

Weitere diffraktive optische Elemente sind aus JPH1031909A, US2017184270A1 und EP1500871A2 bekannt.

Die letzten Jahre haben gezeigt, dass auf Kundenseite das Design für Scheinwerfer immer wichtiger und dominierender wird und sich auf die Kaufentscheidung auswirkt. Dabei ist es auch zunehmend wichtig, für Kraftfahrzeugscheinwerfer Alleinstellungsmerkmale zu schaffen, so dass diese von den Kunden als Produkt mit einer bestimmten Herkunft im Sinne eines Echtheitsmerkmals wahrgenommen werden.

Die derzeit bekannten Lösungen zum Erzielen einer Designwirkung bei Kraftfahrzeugscheinwerfern beschränken sich auf eine Varianz von Oberflächenstrukturen, welche durch Narbungen und ähnliche Verfahren erstellt werden. Für die farbliche Gestaltung werden eingefärbte Kunststoffe, Metallisierungen und teilweise Lackierungen eingesetzt.

Es ist eine Aufgabe der Erfindung, einen Kraftfahrzeugscheinwerfer bereitzustellen, der sich durch eine besondere und neuartige Designwirkung auf Kunden auszeichnet. Dieses Design soll nicht nur ansprechend sein, sondern als ein Alleinstellungsmerkmal wahrgenommen werden. Wesentlich ist jedoch, dass diese neuartige Designwirkung das durch die Lichtverteilung erhaltene Lichtbild nicht oder nur geringfügig beeinflussen soll. Insbesondere sollen durch das neuartige Design keine lichtformenden Effekte in Bezug auf die eigentliche Lichtfunktion des Kraftfahrzeugscheinwerfers entstehen. Ferner ist es eine Aufgabe der Erfindung, einen von außen sichtbaren humanprüfbaren Plagiats-, Echtheitsund Fälschungsschutz für Kraftfahrzeugscheinwerfer bereitzustellen, so dass zur Authentifizierung keine Notwendigkeit des Ausbaus des Scheinwerfers aus dem Kraftfahrzeug oder des Zerlegens des Scheinwerfers besteht.

Diese Aufgaben werden durch einen Kraftfahrzeugscheinwerfer gemäß den Merkmalen des Anspruchs 1 gelöst. Varianten und Weiterbildungen sind in den abhängigen Ansprüchen abgebildet.

Dank der Erfindung werden neuartige und besonders ansprechende farbliche Designeffekte und farbliche Gestaltungsmöglichkeiten für Kraftfahrzeugscheinwerfer realisiert, die ein dekoratives Alleinstellungsmerkmal darstellen, die jedoch das durch die Lichtverteilung erhaltene Lichtbild nicht oder nur geringfügig, d.h. in einem für den Betrachter im Wesentlichen nicht wahrnehmbaren Ausmaß, beeinflussen und keine lichtformenden Eigenschaften aufweisen.

Kraftfahrzeugscheinwerfer werden von Kunden bzw. anderen Verkehrsteilnehmer oftmals als "Augen des Kraftfahrzeugs" wahrgenommen, weshalb auf das Design von Kraftfahrzeugscheinwerfern typischerweise besonderes Augenmerk gelegt wird. Die vorliegende Erfindung macht sich diese Wahrnehmung zunutze. Zum Beispiel erwecken die den erfindungsgemäßen Kraftfahrzeugscheinwerfern innewohnenden neuartigen farblichen Designeffekte, die an dem zumindest einen Bauteil ausgebildet werden, die Aufmerksamkeit eines Betrachters, insbesondere eines anderen Verkehrsteilnehmers, besonders leicht und das Kraftfahrzeug wird dadurch besser wahrgenommen, weshalb die Erfindung somit einen Sicherheitsgewinn darstellt. Dass die für einen außenstehenden Betrachter visuell erkennbaren Farbeffekte "an dem zumindest einen Bauteil ausgebildet werden" bedeutet, dass die Farbeffekte unmittelbar auf dem Bauteil ersichtlich sind, z.B. als auf einer Bauteiloberfläche sichtbare oder als in das Bauteil eingebettete sichtbare Farbeffekte.

Darüber hinaus ermöglicht die Erfindung die Übermittlung von Werbebotschaften, z.B. wenn die visuell erkennbaren Farbeffekte das Logo des Fahrzeugherstellers wiedergeben, sowie einen effektiven und von außen sichtbaren humanprüfbaren Plagiats-, Echtheits- und Fälschungsschutz für Kraftfahrzeugscheinwerfer, so dass zur Authentifizierung keine Notwendigkeit besteht, den Kraftfahrzeugscheinwerfer so wie bisher aus dem Kraftfahrzeug auszubauen oder zu zerlegen.

Zusammenfassend kann mit der Erfindung neben den optisch gestaltbaren Farbeffekten auch ein effektiver Plagiatsschutz erreicht werden, um mögliche Nachahmungen schnell und einfach erkennen zu lassen. So lassen sich mittels der Erfindung Farbeffekte an für einen außenstehenden Betrachter sichtbaren Bereichen von Kraftfahrzeugscheinwerferbauteilen sehr leicht erzielen, ohne dass es notwendig ist, den Bauteil selbst mit Farbstoffen zu versehen (z.B. mittels Lackbeschichtung der Bauteiloberfläche oder durch Einbetten von Farbstoffen in den Bauteil).

Gemäß der Erfindung sind die diffraktiven optischen Elemente in einem oder mehreren für die Lichtfunktion des Kraftfahrzeugscheinwerfers nicht relevanten Bereich(en) des zumindest einen Bauteils ausgebildet. Der Bereich bzw. die Bereiche des zumindest einen Bauteils, an dem die visuell erkennbaren Farbeffekte ausgebildet werden, sind jedoch für einen außenstehenden Betrachter sichtbar. Der Begriff "die diffraktiven optischen Elemente sind in einem oder mehreren für die Lichtfunktion des Kraftfahrzeugscheinwerfers nicht relevanten Bereich(en) ausgebildet" bedeutet, dass das durch die Lichtverteilung des Kraftfahrzeugscheinwerfers erhaltene Lichtbild durch die visuell erkennbaren Effekte nicht oder nur geringfügig, d.h. in einem für den Betrachter nicht wahrnehmbaren Ausmaß, beeinflusst wird. In anderen Worten ausgedrückt, weisen die diffraktiven optischen Elemente keine lichtformenden Eigenschaften in Bezug auf die eigentliche Lichtfunktion bzw. die eigentlichen Lichtfunktionen (z.B. Tagfahrlicht, Abblendlicht, Fernlicht, Blinklicht) des Kraftfahrzeugscheinwerfers auf. Dies ist insofern von Bedeutung, als dass die aus der (den) eigentlichen Lichtfunktion(en) des Kraftfahrzeugscheinwerfers resultierende(n) Lichtverteilung(en) gesetzlichen Anforderungen unterliegen, z.B. Mindestleuchtstärkenvorgaben und Vorgaben hinsichtlich der Farbe des abgestrahlten Lichts. Die durch die diffraktiven optischen Elemente durch Beugung des Weißlichts an dem bzw. auf dem zumindest einen Bauteil entstehenden visuell erkennbaren Farbeffekte werden als eigenständige und von der Lichtfunktion unabhängige visuelle Effekte wahrgenommen.

Der Begriff "Weißlicht" wie hierin verwendet bezieht sich auf Licht, das für den menschlichen Betrachter als weiß erscheint.

Der Begriff "Kraftfahrzeug" (KFZ) wie hierin verwendet bezieht sich auf ein- oder mehrspurige motorisierte landgebundene Fahrzeuge wie Motorräder, PKWs, LKWs und dergleichen.

Zweckmäßigerweise ist der erfindungsgemäße Kraftfahrzeugscheinwerfer nach an sich bekannten Scheinwerferbauprinzipien aufgebaut und umfasst ein Gehäuse mit einer Lichtaustrittsöffnung, die mit einer Streuscheibe bzw. einer Abdeckscheibe verdeckt ist. Moderne Kraftfahrzeugscheinwerfer weisen häufig mehrere Lichtmodule auf, die für sich genommen oder im Zusammenwirken einzelne Lichtfunktionen übernehmen können. Diese Lichtmodule sind häufig in unmittelbarer Nähe zueinander in im Scheinwerfergehäuse angeordnet.

Bei einer Variante hat der Kraftfahrzeugscheinwerfer die Form eines Frontscheinwerfers. Der Aufbau eines Frontscheinwerfers ist dem einschlägigen Fachmann bekannt. Frontscheinwerfer umfassen häufig mehrere Lichtmodule, z.B. eine Tagfahrlichteinheit, eine Abblendlichteinheit, eine Fernlichteinheit, eine Blinklichteinheit etc. Dementsprechend können die jeweiligen Lichtmodule des Frontscheinwerfers die Lichtverteilung eines Abblendlichts, eines Fernlichts, eines Tagfahrlichts, eines Blinklichts usw. bilden. Ein erfindungsgemäßer Frontscheinwerfer umfasst daher neben den an sich bekannten Lichtmodulen noch die Merkmale gemäß der Erfindung.

Bei einer anderen Variante hat der Kraftfahrzeugscheinwerfer die Form einer Heckleuchte. Der Aufbau einer Heckleuchte ist dem einschlägigen Fachmann bekannt. Heckleuchten umfassen häufig mehrere Lichtmodule, z.B. eine Rücklichteinheit, eine Bremslichteinheit, eine Blinklichteinheit etc. Dementsprechend können die jeweiligen Lichtmodule der Heckleuchte die Lichtverteilung eines Rücklichts, eines Bremslichts, eines Blinklichts usw. bilden. Eine erfindungsgemäße Heckleuchte umfasst daher neben den an sich bekannten Lichtmodulen noch die Merkmale gemäß der Erfindung.

Bei bestimmten Varianten ist der zumindest eine Bauteil, der die diffraktiven optischen Elemente umfasst, ein Kunststoffbauteil, welcher optional zumindest bereichsweise mit einer reflexionserhöhenden Beschichtung versehen ist. Bei einer besonders bevorzugten Weiterbildung liegen die diffraktiven optischen Elemente in Form von diffraktiven Nanostrukturen vor, die in Bereichen der Oberfläche des Kunststoffbauteils eingeformt oder eingeprägt sind, wobei der Kunststoffbauteil optional zumindest bereichsweise mit einer reflexionserhöhenden Beschichtung versehen ist. Verfahren zum Einprägen oder Einformen von diffraktiven Nanostrukturen sind dem Fachmann hinlänglich bekannt. Beispielsweise können diffraktive Nanostrukturen mittels Spritzgussverfahren unter Verwendung von Werkzeugeinsätzen mit Nanostruktur, Imprintverfahren zur Übertragung der Nanostruktur auf den Kunststoffbauteil mittels Stempel oder mittels Nanostruktureintrag durch ein Heißprägeverfahren in die Oberflächenbereiche des Kunststoffbauteils eingeformt oder eingeprägt werden. Das Spritzgussverfahren ist besonders vorteilhaft, weil es sowohl für transparente Kunststoffbauteile als auch für solche, die noch mit einer reflexionserhöhenden Beschichtung versehen werden (z.B. Reflektoren, welche jedoch nicht Teil der Erfindung sind), eingesetzt werden kann. Durch Beugung des Weißlichts an den diffraktiven optischen Elementen bzw. diffraktiven Nanostrukturen werden auf für einen außenstehenden Betrachter sichtbaren Oberflächenbereichen des Kunststoffbauteils visuell erkennbare Farbeffekte generiert.

Es kann es vorgesehen sein, dass der Kunststoffbauteil, der die diffraktiven optischen Elemente aufweist, zumindest bereichsweise mit einer reflexionserhöhenden Beschichtung versehen ist. Bei Reflektoren (nicht Teil der Erfindung) handelt es sich typischerweise um eine Metallbeschichtung, die durch Bedampfen der Kunststoffoberfläche nach gängiger Art und Weise hergestellt wird. Bei Varianten, wo die diffraktiven optischen Elemente in Form von diffraktiven Nanostrukturen vorliegen, die in Bereichen der Oberfläche des Kunststoffbauteils, z.B. durch Spritzguss oder mittels Imprintverfahren, eingeformt oder eingeprägt sind, erfolgt das Aufbringen der reflexionserhöhenden Beschichtung sinngemäß nach dem Einformen bzw. Einprägen der diffraktiven Nanostrukturen.

Bei anderen Varianten können die diffraktiven optischen Elemente auf einer flexiblen Trägerschicht aufgebracht oder in diese eingeprägt sein oder mit einer Dünnschichtanordnung kombiniert sein, wobei die flexible Trägerschicht bzw. die Dünnschichtanordnung auf dem einen oder den mehreren für die Lichtfunktion des Kraftfahrzeugscheinwerfers nicht relevanten Bereich(en) des zumindest einen Bauteils aufgebracht wird. Durch Beugung des Weißlichts an den diffraktiven optischen Elementen der Trägerschicht bzw. der Dünnschichtanordnung werden auf den für einen außenstehenden Betrachter sichtbaren Oberflächenbereichen des Bauteils visuell erkennbare Farbeffekte generiert. Diese Varianten eignen sich vorzugsweise für diejenigen Bauteile des Kraftfahrzeugscheinwerfers, die nicht aus Kunststoff gefertigt sind und/oder die keine Lichtfunktion erfüllen, z.B. Designblenden. Bei bestimmten Beispielen können die diffraktiven optischen Elemente in Form von diffraktiven Nanostrukturen vorliegen, die auf der Oberfläche der flexiblen Trägerschicht eingeprägt sind. Bei anderen Beispielen können sie in der Dünnschichtanordnung eingebettet sein (z.b. als diffraktive Zwischenschicht). Ferner sind auch komplexere diffraktive Strukturen denkbar, beispielsweise diffraktive (Nano)Strukturen in Form von (computergenerierten) holografischen Elementen (Farbhologramm). Beispielsweise können bei diesen Varianten diffraktive optische Elemente wie diffraktive Nanostrukturen auf flexiblen Trägerschichten, z.B. durch Abformen eines flexiblen Material mittels eines nanostrukturierten Masters, aufgebracht werden; die so erhaltenen flexiblen folienförmigen Trägerschichten mit den darauf eingeformten diffraktiven optischen Elementen werden anschließend auf den für die Lichtfunktion des Kraftfahrzeugscheinwerfers nicht relevanten Bereich(en) des zumindest einen Bauteils aufgebracht werden, z.B. durch Kleben.

Die durch Beugung des Weißlichts durch die diffraktiven optischen Elemente ausgebildeten visuell erkennbaren Effekte sind erfindungsgemäß Farbeffekte, z.B. statische Farbeffekte, , vom Betrachtungswinkel bzw. richtungsabhängige Farbeffekte (z.B. räumlich vor- und/oder zurückspringende Farbeffekte), schillernde Strukturen, Regenbogeneffekte (z.B. wie sie bei CD- oder DVD-Oberflächen bekannt sind), 3D-Farbeffekte wie z.B. holografische Farbeffekte oder farbliche Hologramme (z.B. wie sie bei Banknoten oder Kreditkarten bekannt sind) oder einen zeitlich veränderbaren Farbeindruck durch Variieren der Intensität der Weißlichtquelle.

Vorzugsweise weisen die diffraktiven optischen Elemente wenigstens eine Freiformfläche auf, und die ausgebildeten visuell erkennbaren Farbeffekte sind für einen Betrachter als die wenigstens eine Freiformfläche erkennbar. Diese wenigstens eine Freiformfläche kann vorzugsweise aus der Gruppe bestehend aus einer geometrischen Figur, eines alphanumerischen Zeichens (z.B. Logo) und/oder eines sonstigen gestalterischen Objekts wie z.B. eines Musters ausgewählt. Die an bzw. auf dem zumindest einen Bauteil visuell erkennbaren Farbeffekte werden von einem Betrachter dann als eine solche wenigstens eine Freiformfläche wahrgenommen, z.B. als farbliches Logo oder als farbliches Muster. Hat die Freiformfläche beispielsweise die Form des Firmenlogos des KFZ-Herstellers, dann können die generierten optischen Effekte eine Werbebotschaft übermitteln und gleichzeitig einen effektiven Plagiatsschutz darstellen.

Der zumindest eine Bauteil, der die diffraktiven optischen Elemente umfasst, ist erfindungsgemäß eine Dickwandoptik.

Bei einer ersten Variante ist die zumindest eine Weißlichtquelle gleichzeitig eine Lichtquelle der Beleuchtungsformungseinheit, wobei bei eingeschalteter Lichtverteilung die an dem zumindest einen Bauteil visuell erkennbaren Effekte für einen Betrachter von der Lichtverteilung unterscheidbar wahrnehmbar sind. Beispielsweise handelt es sich bei den visuell erkennbaren Effekten um farbliche Muster oder um ein farbliches Logo, welches sich von der Lichtverteilung des Scheinwerfers farblich unterscheidet.

Bei einer anderen Variante ist die zumindest eine Weißlichtquelle eine eigenständige und von einer Lichtquelle der Beleuchtungsformungseinheit unabhängige Lichtquelle. Die eigenständige Weißlichtquelle ist in diesem Fall unabhängig von der Lichtquelle der Beleuchtungsformungseinheit ansteuerbar.

Erfindungsgemäß ist der zumindest eine Bauteil, der die diffraktiven optischen Elemente umfasst, eine Dickwandoptik mit einer Lichteintrittsfläche, einer Lichtaustrittsfläche und einer totalreflektierenden Mantelfläche, wobei die diffraktiven optischen Elemente auf der totalreflektierenden Mantelfläche angeordnet und/oder in diese eingebettet sind. Die diffraktiven optischen Elemente, beispielsweise diffraktive Nanostrukturen, können wie oben beschrieben in die Mantelfläche der Dickwandoptik, die üblicherweise aus Kunststoff gefertigt ist, mittels Spritzguss oder Imprint eingeformt werden. Vorzugsweise sind die diffraktiven optischen Elemente in den, bezogen auf den eingebauten Zustand des Kraftfahrzeugscheinwerfers im Kraftfahrzeug, seitlichen Bereichen der Mantelfläche angeordnet, da dadurch keine bzw. nur eine äußerst geringe Beeinflussung des Lichtbilds des Kraftfahrzeugscheinwerfers erfolgt und die durch die Lichtbeugung des Weißlichts an den diffraktiven optischen Elementen (d.h. an den seitlichen Bereichen der Mantelfläche) entstehenden visuell erkennbaren Farbeffekte für einen außenstehenden Betrachter (z.B. andere Verkehrsteilnehmer) sehr gut sichtbar sind.

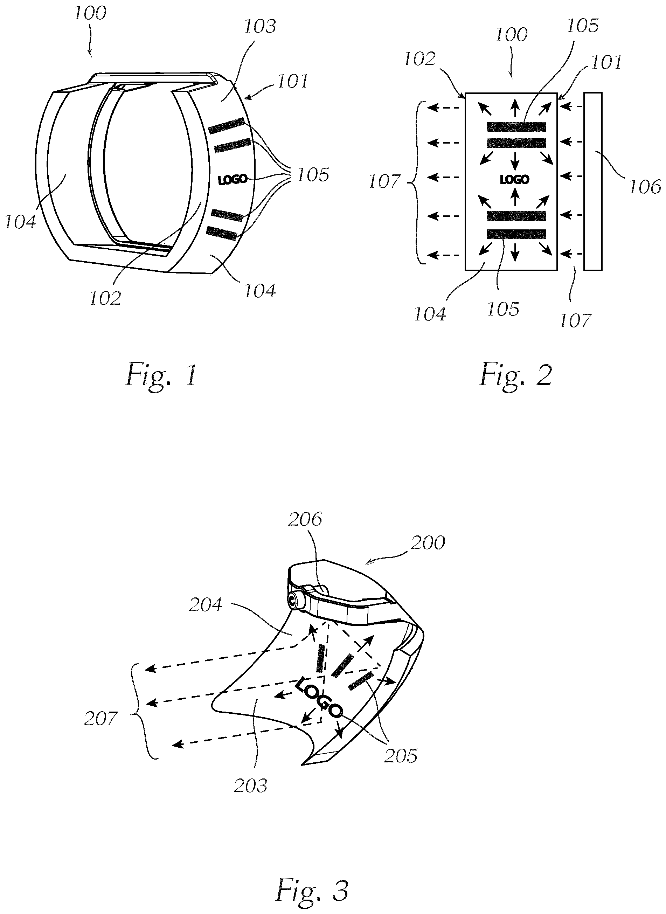

Bei einer ersten Variante dieser Ausführungsform, die hinsichtlich einer Dickwandoptik aus Gründen der einfachen bautechnischen Realisierung bevorzugt ist, ist die zumindest eine Weißlichtquelle gleichzeitig eine Lichtquelle der Beleuchtungsformungseinheit, wobei bei eingeschalteter Lichtverteilung die an der Dickwandoptik visuell erkennbaren Farbeffekte für einen Betrachter von der Lichtverteilung unterscheidbar wahrnehmbar sind, z.B. als farbliches Muster oder Logo. Die Lichtquelle der Beleuchtungsformungseinheit kann beispielsweise eine LED in Verbindung mit einem Lichtleiter sein (siehe hierzu auch weiter unten Fig. 1 und Fig. 2).

Bei einer alternativen Variante dieser, eine Dickwandoptik vorsehenden Ausführungsform, ist die zumindest eine Weißlichtquelle eine eigenständige und von einer Lichtquelle der Beleuchtungsformungseinheit unabhängige Lichtquelle. Diese Variante ist aufgrund der zusätzlichen Weißlichtquelle konstruktiv aufwändiger, ermöglicht jedoch von der Lichtfunktion des Kraftfahrzeugscheinwerfers unabhängige optische Farbeffekte: beispielsweise kann bei Inbetriebnahme des Kraftfahrzeug zuerst die Weißlichtquelle eingeschaltet werden, wodurch zunächst die durch Lichtbeugung an den diffraktiven optischen Elementen entstehenden visuell erkennbaren Farbeffekte (z.B. ein farbiges Muster) auf der Mantelfläche der Dickwandoptik erscheinen, bevor die eigentliche Lichtfunktion des Kraftfahrzeugscheinwerfers hochgedimmt wird.

Bei einem Beispiel, das jedoch nicht Teil dieser Erfindung ist, ist der zumindest eine Bauteil, der die diffraktiven optischen Elemente umfasst, ein Reflektor eines Fernlichtmoduls bzw. eines Abblendlichtmoduls, wobei die diffraktiven optischen Elemente auf lichttechnisch nicht relevanten Bereichen des Reflektors angeordnet sind. In Bezug auf die Erzeugung der Lichtverteilung mittels eines Reflektors wird angemerkt, dass bei Reflektoren typischerweise die gesamte Reflektoroberfläche zur Erzeugung der Lichtverteilung verwendet wird. Bei bestimmten Varianten können die diffraktiven optischen Elemente inmitten der lichtformenden Reflektoroberfläche angeordnet sein; wenn nämlich nur ein kleiner Teil dieser Reflektoroberfläche nicht mehr zur Lichtverteilung beiträgt, nämlich dann wenn zumindest ein diffraktives optisches Element inmitten der Reflektoroberfläche angeordnet ist und somit einen lichttechnisch nicht mehr relevanten Bereich inmitten der Reflektoroberfläche ausbildet, so hat dies nur einen vernachlässigbar geringen und für einen Betrachter nicht wahrnehmbaren Einfluss auf die insgesamt erzeugte Lichtverteilung, weil die restliche Reflektoroberfläche davon nicht beeinflusst wird (ähnlich wie bei einem für einen Brillenträger nicht wahrnehmbaren Kratzer auf einem Brillenglas). Bei anderen Varianten, insbesondere bei größer dimensionierten diffraktiven optischen Elementen oder bestimmten Designs, können die diffraktiven optischen Elemente jedoch auch in einem für einen außenstehenden Betrachter sichtbaren Bereich des Reflektors angeordnet sein, der so ausgelegt ist, dass er außerhalb der für die Lichtverteilung zuständigen Reflektoroberfläche liegt (z.B. in einem Bereich mit einem anderen Winkel, in einer Vertiefung oder in einem Randbereich). Reflektoren sind typischerweise aus Kunststoff gefertigt und mit einer reflexionserhöhenden Beschichtung versehen (z.B. mit einer Metallschicht bedampft). Bei dem Kraftfahrzeugscheinwerfer gemäß diesem Beispiel handelt es sich insbesondere um einen Kraftfahrzeugfrontscheinwerfer.

Bei einer ersten Variante dieses nicht zur Erfindung gehörenden Beispiels, die hinsichtlich eines Reflektors aus Gründen der einfachen bautechnischen Realisierung bevorzugt ist, ist die zumindest eine Weißlichtquelle gleichzeitig eine Lichtquelle der Beleuchtungsformungseinheit, wobei bei eingeschalteter Lichtverteilung die am Reflektor visuell erkennbaren Farbeffekte für einen Betrachter von der Lichtverteilung unterscheidbar wahrnehmbar sind, z.B. als farbliches Muster oder Logo. Die Lichtfunktion (Abblendlicht bzw. Fernlicht) wird dabei nicht bzw. nur geringfügig beeinflusst. Die Lichtquelle der Beleuchtungsformungseinheit kann beispielsweise eine LED sein (siehe hierzu auch weiter unten Fig. 3).

Bei einer alternativen Variante dieses, einen Reflektor vorsehenden und nicht zur Erfindung gehörenden Beispiels, ist die zumindest eine Weißlichtquelle eine eigenständige und von der Lichtquelle der Beleuchtungsformungseinheit unabhängige Lichtquelle. Diese Variante ist aufgrund der zusätzlichen Weißlichtquelle konstruktiv aufwändiger, ermöglicht jedoch von der Lichtfunktion des Kraftfahrzeugscheinwerfers unabhängige visuell erkennbare Farbeffekte: beispielsweise kann bei Inbetriebnahme des Kraftfahrzeug zuerst die Weißlichtquelle eingeschalten, wodurch zunächst die durch Lichtbeugung an den diffraktiven optischen Elementen entstehenden visuell erkennbaren Farbeffekte (z.B. ein farbiges Muster) auf der Reflektoroberfläche erscheinen, bevor die eigentliche Lichtfunktion des Kraftfahrzeugscheinwerfers hochgedimmt wird.

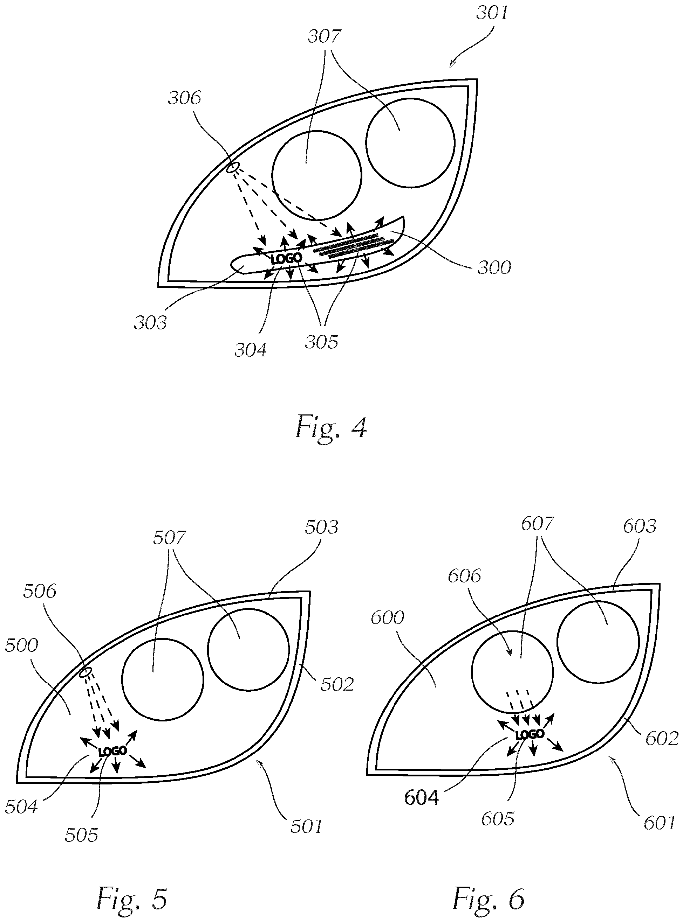

Bei einem weiteren Beispiel, das nicht zur Erfindung gehört, ist der zumindest eine Bauteil, der die diffraktiven optischen Elemente umfasst, eine Blende oder eine Designblende (siehe hierzu auch weiter unten Fig. 4.).Die Blende oder Designblende kann bei bestimmten Varianten zumindest bereichsweise mit einer reflexionserhöhenden Beschichtung versehen sein; beispielsweise kann die Blendenoberfläche metallisiert (Aluminium, verchromt) sein.

Bei weiteren Beispielen, die nicht Teil dieser Erfindung sind, kann der zumindest eine Bauteil eine Abdeckscheibe bzw. eine Streuscheibe oder eine Projektionslinse sein, wobei die diffraktiven optischen Elemente auch bei diesen Bauteilen auf für die Lichtfunktion des Scheinwerfers nicht relevanten bzw. nicht störenden Bereichen angeordnet sind. In Bezug auf Projektionslinsen wird angemerkt, dass bei diesen typischerweise die gesamte Linsenfläche zur Erzeugung der Lichtverteilung verwendet wird. Bei bestimmten Varianten können die diffraktiven optischen Elemente auf in! auf der Linsefläche angeordnet sein; wenn nämlich nur ein kleiner Teil dieser Linsenfläche nicht mehr zur Lichtverteilung beiträgt, nämlich dann wenn zumindest ein diffraktives optisches Element in! auf der Linsenfläche angeordnet ist und somit einen lichttechnisch nicht mehr relevanten Bereich in! auf der Linsenfläche ausbildet, so hat dies nur einen vernachlässigbar geringen und für einen Betrachter nicht wahrnehmbaren Einfluss auf die insgesamt erzeugte Lichtverteilung, weil die restliche Linsenfläche davon nicht beeinflusst wird (ähnlich wie bei einem für einen Brillenträger nicht wahrnehmbaren Kratzer auf einem Brillenglas). Bei anderen Varianten, insbesondere bei größer dimensionierten diffraktiven optischen Elementen oder bestimmten Designs, können die diffraktiven optischen Elemente jedoch auch in einem für einen außenstehenden Betrachter sichtbaren Bereich der Projektionslinse angeordnet sein, der so ausgelegt ist, dass er außerhalb der eigentlichen für die Erzeugung der Lichtverteilung relevanten Linsenfläche liegt (z.B. in einer Vertiefung oder einem ausgeblendeten Randbereich).

Bei bestimmten Varianten kann die zumindest eine Weißlichtquelle eine LED, eine LED verbunden mit einem Lichtleiter oder eine Laserlichtquelle sein. Bei anderen Varianten kann die zumindest eine Weißlichtquelle aus mehreren LEDs oder Laserlichtquellen zusammengesetzt sein, die verschiedene Farben zur Erzeugung von Weißlicht durch additive Farbmischung aufweisen. Bei wiederum anderen Varianten kann die Weißlichtquelle aus einer oder mehreren Laserlichtquellen zusammengesetzt sein, wobei die einen oder mehreren Laserlichtquellen nicht sichtbares Licht (z.B. UV-Licht) oder blaues Licht emittieren, und wobei im Strahlengang zur Erzeugung von Weißlicht ein Konversionselement angeordnet ist, welches zumindest einen Teil des nicht sichtbaren Lichts oder des blauen Lichts in Weißlicht konvertiert.

Ein weiterer Gegenstand der Erfindung ist ein Kraftfahrzeug, das zumindest einen erfindungsgemäßen Kraftfahrzeugscheinwerfer, wie hierin geoffenbart umfasst.

Die hierin beschriebene Kombination aus optisch diffraktiven Elementen und einer Weißlichtquelle kann auch außerhalb der Kraftfahrzeugscheinwerfer an einem Außenbereich des Kraftfahrzeugs angeordnet sein, insbesondere an der Fahrzeugvorderfront wie z.B. am Kühlergrill des Kraftfahrzeugs. Diese Weiterbildung der Erfindung ist daher dadurch gekennzeichnet, dass außerhalb des zumindest einen Kraftfahrzeugscheinwerfers an zumindest einem Außenbereich des Kraftfahrzeugs, vorzugsweise an der Kraftfahrzeugvorderfront, zumindest eine Weißlichtquelle und diffraktive optische Elemente angeordnet sind, wobei die zumindest eine Weißlichtquelle dazu eingerichtet ist, Weißlicht in Richtung der diffraktiven optischen Elemente zu emittieren, die diffraktiven optischen Elemente dazu eingerichtet sind, das von der zumindest einen Weißlichtquelle emittierte Weißlicht unter Ausbildung von an dem Außenbereich des Kraftfahrzeugs visuell erkennbaren Effekten zu beugen, und der Außenbereich des Kraftfahrzeugs, an dem die visuell erkennbaren Effekte ausgebildet werden, für einen außenstehenden Betrachter sichtbar ist, wobei die durch Beugung des Weißlichts durch die diffraktiven optischen Elemente ausgebildeten visuell erkennbaren Effekte Farbeffekte sind. Diese an einem Außenbereich des Kraftfahrzeugs außerhalb der Kraftfahrzeugscheinwerfer angeordnete zumindest eine Weißlichtquelle ist eine eigenständige, d.h. von den Lichtquellen des/der Kraftfahrzeugscheinerwerfer unabhängige, und separat ansteuerbare Weißlichtquelle. Die Weißlichtquelle bzw. die diffraktiven optischen Elemente können wie hierin beschrieben ausbildet sein. Das Vorsehen von diffraktiven optischen Elementen in Kombination mit einer Weißlichtquelle an einem Außenbereich des Kraftfahrzeugs außerhalb des/der Kraftfahrzeugscheinwerfer und zusätzlich zu dem (den) erfindungsgemäßen Kraftfahrzeugscheinwerfer(n), kann in der Gesamtheit betrachtet eine besonders ansprechende Designwirkung auf einen Betrachter haben und ein Alleinstellungsmerkmal mit hohem Wiedererkennungswert schaffen; beispielsweise wenn diese visuell erkennbaren Farbeffekte an der Kraftfahrzeugvorderfront, z.B. am Kühlergrill, sowie in den beiden Frontscheinwerfern gleichzeitig induziert werden.

Die Erfindung samt weiterer Vorzüge wird im Folgenden anhand von nicht einschränkenden Beispielen und beiliegenden Zeichnungen näher beschrieben, wobei die Zeichnungen zeigen:
Fig. 1 zeigt eine perspektivische Ansicht einer Dickwandoptik mit diffraktiven optischen Elementen, zum Einbau in einen Kraftfahrzeugscheinwerfer gemäß der Erfindung,
Fig. 2 zeigt die Dickwandoptik aus Fig. 1 in Seitenansicht in Kombination mit einer Weißlichtquelle in Form einer LED verbunden mit einem Lichtleiter,
Fig. 3 zeigte eine perspektivische Ansicht eines Reflektors für ein Fernlicht bzw. für ein Abblendlicht mit diffraktiven optischen Elementen und einer Weißlichtquelle in Form einer LED, zum Einbau in einen Kraftfahrzeugscheinwerfer (nicht erfindungsgemäß),
Fig. 4 zeigt eine schematische Darstellung eines Kraftfahrzeugscheinwerfers in Vorderansicht, mit diffraktiven optischen Elementen, die auf Designblenden angeordnet sind, sowie mit einer Weißlichtquelle,
Fig. 5 zeigt eine schematische Darstellung einer ersten Variante eines Kraftfahrzeugscheinwerfers (nicht erfindungsgemäß) in Vorderansicht, mit diffraktiven optischen Elementen, die auf einer Streu- bzw. Abdeckscheibe angeordnet sind,
Fig. 6 zeigt eine schematische Darstellung einer zweiten Variante eines Kraftfahrzeugscheinwerfers (nicht erfindungsgemäß) in Vorderansicht, mit diffraktiven optischen Elementen, die auf einer Streu- bzw. Abdeckscheibe angeordnet sind,
Fig. 7 zeigt eine schematische Darstellung eines Kraftfahrzeugscheinwerfers in Vorderansicht, mit diffraktiven optischen Elementen, die auf Projektionslinsen angeordnet sind, und
Fig. 8 zeigt eine Detailansicht einer Kraftfahrzeugvorderfront mit einem Kraftfahrzeugscheinwerfer gemäß der Erfindung in Kombination mit weiteren Weißlichtquellen und diffraktiven optischen Elementen, die an der Fahrzeugvorderfront angeordnet sind.

Es versteht sich, dass die hier beschriebenen Ausführungsformen lediglich der Illustration dienen und nicht als für die Erfindung einschränkend aufzufassen sind; vielmehr fallen unter den Schutzbereich der Erfindung sämtliche Ausgestaltungen, die der Fachmann anhand der Beschreibung finden kann, wobei der Schutzbereich durch die Ansprüche festgelegt ist.

In den Figuren werden für gleiche oder vergleichbare Elemente zum Zwecke der einfacheren Erläuterung und Darstellung gleiche Bezugszeichen verwendet. Die in den Ansprüchen verwendeten Bezugszeichen sollen ferner lediglich die Lesbarkeit der Ansprüche und das Verständnis der Erfindung erleichtern und haben keinesfalls einen den Schutzumfang der Erfindung beeinträchtigenden Charakter.

Fig. 1 zeigt eine perspektivische Ansicht einer Dickwandoptik 100 für bzw. zum Einbau in einen Kraftfahrzeugscheinwerfer gemäß der Erfindung. Fig. 2 zeigt die Dickwandoptik 100 aus Fig. 1 in Seitenansicht in Kombination mit einer Weißlichtquelle 106 in Form einer (nicht im Detail dargestellten) LED verbunden mit einem Lichtleiter. Die Dickwandoptik 100, die in Fig. 1 und Fig. 2 in einer Orientierung wie im eingebauten Zustand des Kraftfahrzeugscheinwerfers im Kraftfahrzeug dargestellt ist, weist eine Lichteintrittsfläche 101, eine Lichtaustrittsfläche 102 und eine totalreflektierenden Mantelfläche 103 auf. In einem seitlichen Bereich 104 der Mantelfläche 103 sind diffraktive optische Elemente 105 in Form von Freiformflächen (hier beispielhaft Streifen und ein Logo) angeordnet. Die diffraktiven optischen Elemente 105 können beispielsweise als diffraktive Nanostrukturen wie oben im Detail beschrieben ausgebildet sein. Hierfür können sie, wie ebenfalls oben in der Beschreibung im Detail beschrieben, in die Mantelfläche 103 der im gezeigten Beispiel aus Kunststoff gefertigten Dickwandoptik 100 eingeformt oder eingeprägt sein, z.B. mittels Spritzguss oder Imprint.

Die Weißlichtquelle 106, im Beispiel eine LED in Kombination mit einem Lichtleiter, die auch gleichzeitig eine Lichtquelle der Beleuchtungsformungseinheit (z.B. Abblendlichtmodul oder Fernlichtmodul) des Kraftfahrzeugscheinwerfer ist, emittiert das Weißlicht in Richtung der diffraktiven optischen Elemente 105. Das auf die diffraktiven optischen Elemente 105 auftreffende Weißlicht wird unter Ausbildung visuell erkennbarer Effekte, nämlich in Form von für einen Betrachter sichtbaren und an der Dickwandoptik ausgebildeten Farbeffekten, gebeugt. In Fig. 2 ist die Lichtbeugung durch Pfeile, die sich von den diffraktiven optischen Elementen 105 weg erstrecken, schematisch dargestellt; die sich horizontal erstreckenden Pfeile 107 symbolisieren die Abstrahlrichtung des von der Weißlichtquelle 106 emittierten Lichts, das die Lichtverteilung des Scheinwerfers ausbildet. Durch das Einformen oder Einprägen der diffraktiven optischen Elemente 105 in den seitlichen Bereichen 104 der Mantelfläche 103 erfolgt keine bzw. nur eine äußerst geringe Beeinflussung des Lichtbilds des Kraftfahrzeugscheinwerfers. Außerdem sind die durch die Lichtbeugung des Weißlichts an den diffraktiven optischen Elementen 105 an dieser Position entstehenden visuell erkennbaren Farbeffekte (d.h. an den seitlichen Bereichen der Mantelfläche visuell erkennbare Farbeffekte) für einen außenstehenden Betrachter (z.B. andere Verkehrsteilnehmer) sehr gut sichtbar.

Fig. 3 zeigte eine perspektivische Ansicht eines Reflektors 200 für ein Fernlicht bzw. für ein Abblendlicht mit diffraktiven optischen Elementen 205 und einer Weißlichtquelle 206 in Form einer LED, für bzw. zum Einbau in einen Kraftfahrzeugscheinwerfer (nicht erfindungsgemäßes Beispiel). Das durch die Weißlichtquelle 206 emittierte Licht wird nach hinlänglich bekannter Art auf der Reflektoroberfläche 203 reflektiert. Die Reflektoroberfläche 203 ist hierfür mit einer reflexionserhöhenden Beschichtung, z.B. einer Metallbeschichung, versehen. Die in Bereichen 204 der Reflektoroberfläche 203 angeordneten diffraktiven optischen Elemente 205 sind so angeordnet, dass sie für die Lichtreflexion des Reflektors keine oder nur eine untergeordnete Rolle spielen und somit die Lichtfunktion des Kraftfahrzeugscheinwerfers nicht beeinträchtigen. Die diffraktiven optische Elemente 205 sind im gezeigten Beispiel in Form von Freiformflächen (hier beispielhaft Streifen und ein Logo) in den Bereichen 204 angeordnet. In Bezug auf die Erzeugung der Lichtverteilung mittels eines Reflektors wird angemerkt, dass bei Reflektoren typischerweise die gesamte Reflektoroberfläche zur Erzeugung der Lichtverteilung verwendet wird. In der in Fig. 3 gezeigten Variante sind die diffraktiven optischen Elemente 205 inmitten der lichtformenden Reflektoroberfläche 203 angeordnet; wenn nämlich nur ein kleiner Teil dieser Reflektoroberfläche 203 nicht mehr zur Lichtverteilung beiträgt, nämlich in jenem Teil, in dem die diffraktiven optischen Elemente inmitten der Reflektoroberfläche 203 angeordnet sind und somit einen lichttechnisch nicht mehr relevanten Bereich 204 inmitten der Reflektoroberfläche 203 ausbilden, so hat dies nur einen vernachlässigbar geringen und für einen Betrachter nicht wahrnehmbaren Einfluss auf die insgesamt erzeugte Lichtverteilung, weil die restliche Reflektoroberfläche 203 davon nicht beeinflusst wird (ähnlich wie bei einem für einen Brillenträger nicht wahrnehmbaren Kratzer auf einem Brillenglas). Bei (hier nicht dargestellten) abgewandelten Varianten des in Fig. 3 gezeigten nicht erfindungsgemäßen Beispiels, insbesondere bei größer dimensionierten diffraktiven optischen Elementen oder bestimmten Designs, können die diffraktiven optischen Elemente jedoch auch in einem für einen außenstehenden Betrachter sichtbaren Bereich des Reflektors angeordnet sein, der so ausgelegt ist, dass er außerhalb der für die Ausbildung der Lichtverteilung zuständigen Reflektoroberfläche liegt (z.B. in einem Bereich mit einem anderen Winkel, in einer Vertiefung oder in einem Randbereich). Die diffraktiven optischen Elemente 205 können beispielsweise als diffraktive Nanostrukturen wie oben im Detail beschrieben ausgebildet sein. Hierfür können sie, wie ebenfalls oben in der Beschreibung im Detail beschrieben, bei der Herstellung des normalerweise aus Kunststoff gefertigten Reflektors 200 in die Reflektoroberfläche 203 eingeformt oder eingeprägt werden, z.B. mittels Spritzguss oder Imprint. Anschließend wird die Reflektoroberfläche 203 noch nach an sich bekannter Weise mit einer reflexionserhöhenden Beschichtung versehen, z.B. mit Metall bedampft.

Die Weißlichtquelle 206, die auch gleichzeitig eine Lichtquelle der Beleuchtungsformungseinheit (z.B. Abblendlichtmodul oder Fernlichtmodul) des Kraftfahrzeugscheinwerfer ist, emittiert das Weißlicht auch in Richtung der diffraktiven optischen Elemente 205 in den lichttechnisch nicht relevanten Bereichen 204 der Reflektoroberfläche 203. Das auf die diffraktiven optischen Elemente 205 auftreffende Weißlicht wird unter Ausbildung visuell erkennbarer Effekte, nämlich in Form von für einen Betrachter sichtbaren Farbeffekten, gebeugt. In Fig. 3 ist die Lichtbeugung durch Pfeile, die sich von den diffraktiven optischen Elementen 205 weg erstrecken, schematisch dargestellt; ebenso durch Pfeile 207 dargestellt sind die für die Lichtverteilung des Scheinwerfers am Reflektor reflektierten Lichtstrahlen. Durch das Einformen oder Einprägen der diffraktiven optischen Elemente 205 in Bereiche 204 der Reflektoroberfläche 203 erfolgt wie weiter oben im Detail ausgeführt keine bzw. nur eine äußerst geringe Beeinflussung des Lichtbilds des Kraftfahrzeugscheinwerfers. Außerdem sind die durch die Lichtbeugung des Weißlichts an den diffraktiven optischen Elementen 205 an dieser Position entstehenden visuell erkennbaren Effekte für einen außenstehenden Betrachter (z.B. andere Verkehrsteilnehmer) sehr gut sichtbar und von der Lichtverteilung unterscheidbar wahrnehmbar.

Fig. 4 zeigt eine schematische Darstellung eines Kraftfahrzeugscheinwerfers 301, genauer gesagt eines Kraftfahrzeugfrontscheinwerfers 301, in Vorderansicht (nicht erfindungsgemäßes Beispiel). Der Kraftfahrzeugscheinwerfer 301 umfasst im gezeigten Beispiel zwei Beleuchtungsformungseinheiten in Form von Lichtmodulen 307 sowie eine Designblende 300 mit einer Designblendenoberfläche 303. Auf Bereichen 304 der Designblende 300 sind diffraktive optische Elemente 305 in Form von Freiformflächen (hier beispielhaft Streifen und ein Logo) angeordnet. Die Designblende trägt im Kraftfahrzeugscheinwerfers 301 nicht zur Lichtfunktion bei, sondern besitzt eine reine Designfunktion.

Die diffraktiven optischen Elemente 305 können beispielsweise als diffraktive Nanostrukturen wie oben im Detail beschrieben ausgebildet sein. Hierfür können sie, wie ebenfalls oben in der Beschreibung im Detail beschrieben, bei der Herstellung einer aus Kunststoff gefertigten Designblende 300 in die Designblendenoberfläche 303 eingeformt oder eingeprägt werden, z.B. mittels Spritzguss oder Imprint. Anschließend kann die Designblendenoberfläche 303 noch nach an sich bekannter Weise metallisiert (z.B. verchromt) werden, um der Blende ein hochglänzendes Erscheinungsbild zu verleihen.

Alternativ können die diffraktiven optischen Elemente 305 aber auch wie oben in der Beschreibung im Detail beschrieben ist und worauf an dieser Stelle verwiesen wird, auf einer flexiblen Trägerschicht, z.B. in Form einer Folie, aufgebracht oder in diese eingeprägt sein oder mit einer Dünnschichtanordnung kombiniert sein. Diese Alternative bietet sich dann an, wenn die Designblende 300 nicht aus Kunststoff gefertigt ist. Die flexiblen folienförmigen Trägerschichten mit den diffraktiven optischen Elementen können anschließend auf der Oberfläche 303 der Designblende 300 in den Bereichen 304 aufgebracht werden, z.B. durch Kleben.

Im Kraftfahrzeugscheinwerfer 301 ist ferner eine Weißlichtquelle 306 angeordnet. Die Weißlichtquelle 306 ist eine eigenständige und von den Lichtquellen der Lichtmodule 307 unabhängige Lichtquelle. Die Weißlichtquelle 306 emittiert das Weißlicht in Richtung der auf der Designblendenoberfläche 303 angeordneten diffraktiven optischen Elemente 305. Das auf die diffraktiven optischen Elemente 305 auftreffende Weißlicht wird unter Ausbildung visuell erkennbarer Effekte, nämlich in Form von auf der Designblendenoberfläche 303 ausgebildeten für einen Betrachter sichtbaren Farbeffekten, gebeugt. In Fig. 4 ist die Lichtbeugung durch Pfeile, die sich von den diffraktiven optischen Elementen 305 weg erstrecken, schematisch dargestellt. Die ausgebildeten visuell erkennbaren Farbeffekte können durch die eigenständig ansteuerbare Weißlichtquelle 306 auch dann induziert werden, wenn die Lichtmodule 307 nicht in Betrieb sind. Durch die Anordnung der diffraktiven optischen Elemente 305 auf der Oberfläche 303 der für die Lichtfunktion irrelevanten Designblende 300 erfolgt keine Beeinflussung des Lichtbilds des Kraftfahrzeugscheinwerfers 301. Außerdem sind die durch die Lichtbeugung des Weißlichts an den diffraktiven optischen Elementen 305 an der Designblende 300 bzw. an der Designblendenoberfläche 303 entstehenden visuell erkennbaren Farbeffekte für einen außenstehenden Betrachter (z.B. andere Verkehrsteilnehmer) sehr gut sichtbar und auch bei eingeschalteter Lichtverteilung unterscheidbar wahrnehmbar.

Fig. 5 zeigt eine schematische Darstellung einer ersten Variante eines Kraftfahrzeugscheinwerfers 501 (nicht erfindungsgemäßes Beispiel) in Vorderansicht, mit diffraktiven optischen Elementen 505, die auf einer Streu- bzw. Abdeckscheibe 500 des Kraftfahrzeugscheinwerfers 501 angeordnet sind.

Der Kraftfahrzeugscheinwerfer 501 umfasst im gezeigten Beispiel zwei Beleuchtungsformungseinheiten in Form von Lichtmodulen 507 (z.B. Abblendlichtmodul oder Fernlichtmodul), die nach an sich bekannter Bauweise in einem Gehäuse 502 mit einer Lichtaustrittsöffnung 503 untergebracht sind. Die Lichtaustrittsöffnung 503 ist mit der Streu- bzw. Abdeckscheibe 500 verdeckt.

In jenen Bereichen 504 der Streu- bzw. Abdeckscheibe 500, welche die Lichtfunktion des Kraftfahrzeugscheinwerfers nicht beeinträchtigen, sind diffraktive optische Elemente 505 in Form von Freiformflächen (hier beispielhaft in Form eines Logos dargestellt) angeordnet. Die diffraktiven optischen Elemente 505 können beispielsweise als diffraktive Nanostrukturen wie oben im Detail beschrieben ausgebildet sein. Hierfür können sie, wie ebenfalls oben in der Beschreibung im Detail beschrieben, bei der Herstellung der normalerweise aus Kunststoff gefertigten Streu- bzw. Abdeckscheibe 500 in deren Oberfläche eingeformt oder eingeprägt werden, z.B. mittels Spritzguss oder Imprint.

Im Kraftfahrzeugscheinwerfer 501 ist ferner eine Weißlichtquelle 506 angeordnet. Die Weißlichtquelle 506 ist eine eigenständige und von den Lichtquellen der Lichtmodule 507 unabhängige Lichtquelle. Die Weißlichtquelle 506 emittiert das Weißlicht in Richtung der auf den Bereichen 503 der Streu- bzw. Abdeckscheibe 500 angeordneten diffraktiven optischen Elemente 505. Das auf die diffraktiven optischen Elemente 505 auftreffende Weißlicht wird unter Ausbildung visuell erkennbarer Effekte, nämlich in Form von für einen Betrachter sichtbaren Farbeffekten, gebeugt. In Fig. 5 ist die Lichtbeugung durch Pfeile, die sich von den diffraktiven optischen Elementen 505 weg erstrecken, schematisch dargestellt. Die ausgebildeten visuell erkennbaren Farbeffekte können durch die eigenständig ansteuerbare Weißlichtquelle 506 auch dann induziert werden, wenn die Lichtmodule 507 nicht in Betrieb sind. Durch die Anordnung der diffraktiven optischen Elemente 505 in den Bereichen 503 erfolgt keine Beeinflussung des Lichtbilds des Kraftfahrzeugscheinwerfers 501. Außerdem sind die durch die Lichtbeugung des Weißlichts an den diffraktiven optischen Elementen 505 an der Streu- bzw. Abdeckscheibe 500 bzw. an den Bereichen 503 entstehenden visuell erkennbaren Effekte für einen außenstehenden Betrachter (z.B. andere Verkehrsteilnehmer) sehr gut sichtbar und auch bei eingeschalteter Lichtverteilung unterscheidbar wahrnehmbar.

Fig. 6 ist eine Abwandlung der in Fig. 5 dargestellten Variante und zeigt eine schematische Darstellung einer weiteren Variante eines Kraftfahrzeugscheinwerfers 601 (nicht erfindungsgemäßes Beispiel) in Vorderansicht, mit diffraktiven optischen Elementen 605, die auf einer Streu- bzw. Abdeckscheibe 600 des Kraftfahrzeugscheinwerfers 601 angeordnet sind.

Der Kraftfahrzeugscheinwerfer 601 umfasst im gezeigten Beispiel zwei Beleuchtungsformungseinheiten in Form von Lichtmodulen 607 (z.B. Abblendlichtmodul oder Fernlichtmodul) die nach an sich bekannter Bauweise in einem Gehäuse 602 mit einer Lichtaustrittsöffnung 603 untergebracht sind. Die Lichtaustrittsöffnung 603 ist mit der Streu- bzw. Abdeckscheibe 600 verdeckt.

In jenen Bereichen 604 der Streu- bzw. Abdeckscheibe 600, welche die Lichtfunktion des Kraftfahrzeugscheinwerfers nicht beeinträchtigen, sind diffraktive optische Elemente 605 in Form von Freiformflächen (hier beispielhaft in Form eines Logos dargestellt) angeordnet. Die diffraktiven optischen Elemente 605 können beispielsweise als diffraktive Nanostrukturen wie oben im Detail beschrieben ausgebildet sein. Hierfür können sie, wie ebenfalls oben in der Beschreibung im Detail beschrieben, bei der Herstellung der normalerweise aus Kunststoff gefertigten Streu- bzw. Abdeckscheibe 600 in deren Oberfläche eingeformt oder eingeprägt werden, z.B. mittels Spritzguss oder Imprint.

Im Unterschied zu der in Fig. 5 gezeigten Variante umfasst der Kraftfahrzeugscheinwerfer 601 aus Fig. 6 keine eigenständige Weißlichtquelle zum Bestrahlen der diffraktiven optischen Elemente 605. Vielmehr ist die Weißlichtquelle 606 bei dieser Variante auch gleichzeitig eine Lichtquelle der Beleuchtungsformungseinheit des Kraftfahrzeugscheinwerfers 601 und emittiert das Weißlicht auch in Richtung der diffraktiven optischen Elemente 605 in den Bereichen 604 der Streu- bzw. Abdeckscheibe 600. Das auf die diffraktiven optischen Elemente 605 auftreffende Weißlicht wird unter Ausbildung visuell erkennbarer Effekte, nämlich in Form von für einen Betrachter sichtbaren Farbeffekten, gebeugt. In Fig. 6 ist die Lichtbeugung durch Pfeile, die sich von den diffraktiven optischen Elementen 605 weg erstrecken, schematisch dargestellt. Durch das Einformen der diffraktiven optischen Elemente 605 die Bereiche 604 der Streu- bzw. Abdeckscheibe erfolgt keine Wesentliche Beeinflussung des Lichtbilds des Kraftfahrzeugscheinwerfers 601. Außerdem sind die durch die Lichtbeugung des Weißlichts an den diffraktiven optischen Elementen 605 an dieser Position entstehenden visuell erkennbaren Farbeffekte für einen außenstehenden Betrachter (z.B. andere Verkehrsteilnehmer) sehr gut sichtbar und von der Lichtverteilung unterscheidbar wahrnehmbar.

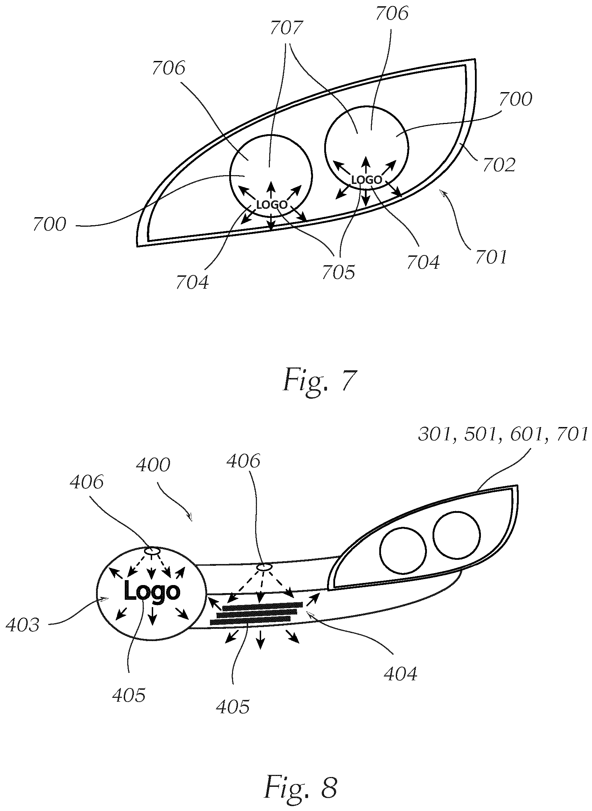

Fig. 7 zeigt eine schematische Darstellung eines Kraftfahrzeugscheinwerfers 701 (nicht erfindungsgemäßes Beispiel) in Vorderansicht, mit diffraktiven optischen Elementen 705, die auf Projektionslinsen 701 angeordnet sind.

Der Kraftfahrzeugscheinwerfer 701 umfasst im gezeigten Beispiel zwei Beleuchtungsformungseinheiten in Form von Lichtmodulen 707 (z.B. Abblendlichtmodul oder Fernlichtmodul) die nach an sich bekannter Bauweise in einem Gehäuse 702 mit einer Lichtaustrittsöffnung 703 untergebracht sind. Die Lichtaustrittsöffnung 703 ist mit einer Streu- bzw. Abdeckscheibe verdeckt. Die Lichtmodule 707 sind nach an sich bekannter Art aufgebaut und umfassen jeweils eine Projektionslinse 700 sowie eine Lichtquelle 706.

In jenen Bereichen 704 der Projektionslinsen 700, welche die Lichtfunktion des Kraftfahrzeugscheinwerfers 701 nicht beeinträchtigen, sind diffraktive optische Elemente 705 in Form von Freiformflächen (hier beispielhaft in Form eines Logos dargestellt) angeordnet. In Bezug auf Projektionslinsen wird angemerkt, dass bei diesen typischerweise die gesamte Linsenfläche zur Erzeugung der Lichtverteilung verwendet wird. Wie in Fig. 7 beispielhaft gezeigt, können die diffraktiven optischen Elemente auf der Projektionslinse 700 angeordnet sein oder in diese eingebettet sein; wenn nämlich nur ein kleiner Teil der Linsenfläche der Projektionslinse 700 nicht mehr zur Lichtverteilung beiträgt, nämlich jener Teil, in dem die diffraktiven optischen Elemente 705 auf/in der Projektionslinse 700 angeordnet sind und somit einen für die Lichtfunktion nicht relevanten Bereich 704 auf/in der Projektionslinse 700 ausbilden, so hat dies nur einen vernachlässigbar geringen und für einen Betrachter nicht wahrnehmbaren Einfluss auf die insgesamt erzeugte Lichtverteilung, weil die restliche Linsenfläche davon nicht beeinflusst wird (ähnlich wie bei einem für einen Brillenträger nicht wahrnehmbaren Kratzer auf einem Brillenglas). Bei anderen Varianten (nicht dargestellt), insbesondere bei größer dimensionierten diffraktiven optischen Elementen oder bestimmten Designs, können die diffraktiven optischen Elemente jedoch auch in einem für einen außenstehenden Betrachter sichtbaren Bereich der Projektionslinse angeordnet sein, der so ausgelegt ist, dass er außerhalb der eigentlichen für die Erzeugung der Lichtverteilung relevanten Linsenfläche liegt (z.B. in einer Vertiefung oder einem ausgeblendeten Randbereich).

Die diffraktiven optischen Elemente 705 können beispielsweise als diffraktive Nanostrukturen wie oben im Detail beschrieben ausgebildet sein. Hierfür können sie, wie ebenfalls oben in der Beschreibung im Detail beschrieben, bei der Herstellung der normalerweise aus Kunststoff gefertigten Projektionslinse 700 in deren Oberfläche eingeformt oder eingeprägt werden, z.B. mittels Spritzguss oder Imprint.

Die Lichtquellen 706 der Lichtmodule 707 fungieren bei dieser Variante gleichzeitig als Weißlichtquellen 706 und emittieren das Weißlicht auch in Richtung der diffraktiven optischen Elemente 705 in den Bereichen 704 der Projektionslinsen 700. Das auf die diffraktiven optischen Elemente 705 auftreffende Weißlicht wird unter Ausbildung visuell erkennbarer Effekte, nämlich in Form von für einen Betrachter sichtbaren Farbeffekten, gebeugt. In Fig. 7 ist die Lichtbeugung durch Pfeile, die sich von den diffraktiven optischen Elementen 705 weg erstrecken, schematisch dargestellt. Durch das Einformen oder Einprägen der diffraktiven optischen Elemente 705 in die Bereiche 704 der Projektionslinsen 700 erfolgt wie weiter oben im Detail ausgeführt keine wesentliche Beeinflussung des Lichtbilds des Kraftfahrzeugscheinwerfers 701. Außerdem sind die durch die Lichtbeugung des Weißlichts an den diffraktiven optischen Elementen 705 an dieser Position entstehenden visuell erkennbaren Farbeffekte für einen außenstehenden Betrachter (z.B. andere Verkehrsteilnehmer) sehr gut sichtbar und von der Lichtverteilung unterscheidbar wahrnehmbar.

Fig. 8 zeigt eine vorteilhafte Weiterbildung der Erfindung, nämlich einen Ausschnitt aus einer Kraftfahrzeugvorderfront 400 mit einem Kraftfahrzeugscheinwerfer gemäß der Erfindung, z.B. mit einem Kraftfahrzeugscheinwerfer umfassend eine Dickwandoptik 100 wie oben beschrieben. Zusätzlich zu einem erfindungsgemäßen Kraftfahrzeugscheinwerfer sind weitere Weißlichtquellen 406 sowie diffraktive optische Elemente 405 an der Fahrzeugvorderfront angeordnet. Im gezeigten Beispiel sind Weißlichtquellen 406 sowie diffraktive optische Elemente 405 jeweils am Kühlergrill 404 und in der Fahrzeugmitte 403 positioniert.

Die diffraktiven optischen Elemente 405 liegen in Form von Freiformflächen (hier beispielhaft Streifen und ein Logo) vor und können beispielsweise als diffraktive Nanostrukturen wie oben im Detail beschrieben ausgebildet sein. Hierfür können sie, wie ebenfalls oben in der Beschreibung im Detail beschrieben, bei der Herstellung der Bauteile für die Kraftfahrzeugvorderfront in diese eingeformt oder eingeprägt werden, z.B. mittels Spritzguss oder Imprint. Alternativ können die diffraktiven optischen Elemente 405 aber auch wie oben in der Beschreibung im Detail beschrieben ist und worauf an dieser Stelle verwiesen wird, auf einer flexiblen Trägerschicht, z.B. in Form einer Folie, aufgebracht oder in diese eingeprägt sein oder mit einer Dünnschichtanordnung kombiniert sein. Diese Alternative bietet sich dann an, wenn die mit den diffraktiven optischen Elementen 405 zu bestückenden Bauteile nicht aus Kunststoff gefertigt ist. Die flexiblen folienförmigen Trägerschichten mit den diffraktiven optischen Elementen können anschließend auf den gewünschten Bereichen (z.B. Kühlergrill 404 oder Fahrzeugmitte 403) aufgebracht werden, z.B. durch Kleben.

Die Weißlichtquellen 406 sind eigenständige und von den Lichtquellen des Kraftfahrzeugscheinwerfers unabhängige Lichtquelle. Die Weißlichtquellen 406 emittieren das Weißlicht in Richtung der jeweiligen diffraktiven optischen Elemente 405. Das auf die diffraktiven optischen Elemente 405 auftreffende Weißlicht wird unter Ausbildung visuell erkennbarer Effekte, nämlich in Form von für einen Betrachter sichtbaren Farbeffekten, gebeugt. In Fig. 8 ist die Lichtbeugung durch Pfeile, die sich von den diffraktiven optischen Elementen 405 weg erstrecken, schematisch dargestellt. Die ausgebildeten visuell erkennbaren Farbeffekte können durch die eigenständig ansteuerbaren Weißlichtquellen 406 auch dann induziert werden, wenn die Lichtmodule des/der Kraftfahrzeugscheinwerfer nicht in Betrieb sind. Durch die Anordnung der diffraktiven optischen Elemente 405 außerhalb der Kraftfahrzeugscheinwerfer an der Fahrzeugvorderfront 400 erfolgt keine Beeinflussung des von den Kraftfahrzeugscheinwerfern erzeugten Lichtbilds. Das Vorsehen von optisch diffraktiven Elementen 405 in Kombination mit einer Weißlichtquelle 406 an einem Außenbereich des Kraftfahrzeugs außerhalb der Kraftfahrzeugscheinwerfer und zusätzlich zu dem (den) erfindungsgemäßen Kraftfahrzeugscheinwerfer(n), kann in der Gesamtheit betrachtet eine besonders ansprechende Designwirkung auf einen Betrachter haben und ein Alleinstellungsmerkmal mit hohem Wiedererkennungswert schaffen; beispielsweise wenn diese visuell erkennbaren Farbeffekte an der Kraftfahrzeugvorderfront 400, z.B. am Kühlergrill 404, sowie in dem(den) Kraftfahrzeugscheinwerfer(n) gleichzeitig induziert werden.

Die in den Fig. 4 - 8 beschriebenen Weißlichtquellen können eine LED, eine LED verbunden mit einem Lichtleiter oder eine Laserlichtquelle sein. Bei anderen Varianten können die in den Fig. 4 - 8 beschriebenen Weißlichtquellen aus mehreren LEDs oder Laserlichtquellen zusammengesetzt sein, die verschiedene Farben zur Erzeugung von Weißlicht durch additive Farbmischung aufweisen. Bei wiederum anderen Varianten können die in den Fig. 4 - 8 beschriebenen Weißlichtquellen aus einer oder mehreren Laserlichtquellen zusammengesetzt sein, wobei die einen oder mehreren Laserlichtquellen nicht sichtbares Licht (z.B. UV-Licht) oder blaues Licht emittieren, und wobei im Strahlengang zur Erzeugung von Weißlicht ein Konversionselement angeordnet ist, welches zumindest einen Teil des nicht sichtbaren Lichts oder des blauen Lichts in Weißlicht konvertiert. Auch die in Fig. 1, Fig. 2 und Fig. 3 gezeigten Weißlichtquellen 106 (LED in Verbindung mit einem Lichtleiter) bzw. 206 (LED) können durch die genannten anderen Weißlichtquellen ersetzt werden.

### BEZUGSZEICHENLISTE

- 100: Dickwandoptik
- 101: Lichteintrittsfläche der Dickwandoptik
- 102: Lichtaustrittsfläche der Dickwandoptik
- 103: Mantelfläche der Dickwandoptik
- 104: Seitlicher Bereich der Mantelfläche
- 105: Diffraktive optische Elemente
- 106: Weißlichtquelle in Form einer LED in Verbindung mit einem Lichtleiter
- 107: Abstrahlrichtung des Lichts
- 200: Reflektor
- 203: Reflektoroberfläche
- 204: Bereich der Reflektoroberfläche mit diffraktiven optischen Elementen
- 205: Diffraktive optische Elemente
- 206: Weißlichtquelle in Form einer LED
- 207: Abstrahlrichtung des Lichts
- 300: Designblende
- 301: Kraftfahrzeugscheinwerfer
- 303: Designblendenoberfläche
- 304: Bereich der Designblendenoberfläche mit diffraktiven optischen Elementen
- 305: Diffraktive optische Elemente
- 306: Weißlichtquelle
- 307: Lichtmodul
- 400: Kraftfahrzeugvorderfront
- 403: Fahrzeugmitte
- 404: Kühlergrill
- 405: Diffraktive optische Elemente
- 406: Weißlichtquelle
- 500: Streuscheibe/Abdeckscheibe
- 501: Kraftfahrzeugscheinwerfer
- 502: Gehäuse des Kraftfahrzeugscheinwerfers
- 503: Lichtaustrittsöffnung
- 504: Bereich der Streuscheibe/Abdeckscheibe mit diffraktiven optischen Elementen
- 505: Diffraktive optische Elemente
- 506: Weißlichtquelle
- 507: Lichtmodul
- 600: Streuscheibe/Abdeckscheibe
- 601: Kraftfahrzeugscheinwerfer
- 602: Gehäuse des Kraftfahrzeugscheinwerfers
- 603: Lichtaustrittsöffnung
- 604: Bereich der Streuscheibe/Abdeckscheibe mit diffraktiven optischen Elementen
- 605: Diffraktive optische Elemente
- 606: Weißlichtquelle bzw. Lichtquelle des Lichtmoduls
- 607: Lichtmodul
- 700: Projektionslinse des Lichtmoduls
- 701: Kraftfahrzeugscheinwerfer
- 702: Gehäuse des Kraftfahrzeugscheinwerfers
- 703: Lichtaustrittsöffnung
- 704: Bereich der Projektionslinse mit diffraktiven optischen Elementen
- 705: Diffraktive optische Elemente
- 706: Weißlichtquelle bzw. Lichtquelle des Lichtmoduls
- 707: Lichtmodul

## Patentansprüche

1. Kraftfahrzeugscheinwerfer, in Form eines Frontscheinwerfers oder in Form einer Heckleuchte, mit zumindest einer Beleuchtungsformungseinheit zur Erzeugung von zumindest einer Lichtverteilung und zumindest einem Bauteil (100), der diffraktive optische Elemente (105) umfasst,
**dadurch gekennzeichnet, dass**
der zumindest eine Bauteil (100), der die diffraktiven optischen Elemente (105) umfasst, eine Dickwandoptik mit einer Lichteintrittsfläche (101), einer Lichtaustrittsfläche (102) und einer totalreflektierenden Mantelfläche (103) ist, wobei die diffraktiven optischen Elemente (105) in, bezogen auf den eingebauten Zustand des Kraftfahrzeugscheinwerfers im Kraftfahrzeug, seitlichen Bereichen (104) der totalreflektierenden Mantelfläche (103) angeordnet sind;
der Kraftfahrzeugscheinwerfer zumindest eine Weißlichtquelle (106) umfasst, die dazu eingerichtet ist, Weißlicht in Richtung der diffraktiven optischen Elemente (105) zu emittieren, die diffraktiven optischen Elemente (105) dazu eingerichtet sind, das von der zumindest einen Weißlichtquelle (106) emittierte Weißlicht unter Ausbildung von an den seitlichen Bereichen der Mantelfläche (103) der Dickwandoptik (100) für einen außenstehenden Betrachter sichtbaren visuell erkennbaren Effekten zu beugen, wobei durch die in den seitlichen Bereichen der Mantelfläche (103) angeordneten diffraktiven optischen Elemente (105) das durch die Lichtverteilung des Kraftfahrzeugscheinwerfers erhaltene Lichtbild durch die visuell erkennbaren Effekte nicht oder in einem für einen Betrachter nicht wahrnehmbaren Ausmaß beeinflusst wird, und dass die durch Beugung des Weißlichts durch die diffraktiven optischen Elemente (105) ausgebildeten visuell erkennbaren Effekte Farbeffekte sind.

2. Kraftfahrzeugscheinwerfer nach Anspruch 1, **dadurch gekennzeichnet, dass** der zumindest eine Bauteil (100), der die diffraktiven optischen Elemente umfasst, ein Kunststoffbauteil ist, welcher optional zumindest bereichsweise mit einer reflexionserhöhenden Beschichtung versehen ist.

3. Kraftfahrzeugscheinwerfer nach Anspruch 2, **dadurch gekennzeichnet, dass** die diffraktiven optischen Elemente (105) in Form von diffraktiven Nanostrukturen vorliegen, die in Bereichen der Oberfläche des Kunststoffbauteils eingeformt oder eingeprägt sind, wobei der Kunststoffbauteil gegebenenfalls zumindest bereichsweise mit einer reflexionserhöhenden Beschichtung versehen ist.

4. Kraftfahrzeugscheinwerfer nach Anspruch 1 oder 2, **dadurch gekennzeichnet, dass** die diffraktiven optischen Elemente auf einer flexiblen Trägerschicht aufgebracht oder in diese eingeprägt sind oder mit einer Dünnschichtanordnung kombiniert sind.

5. Kraftfahrzeugscheinwerfer nach Anspruch 4, **dadurch gekennzeichnet, dass** die diffraktiven optischen Elemente in Form von diffraktiven Nanostrukturen vorliegen, die auf der Oberfläche der flexiblen Trägerschicht eingeprägt sind.

6. Kraftfahrzeugscheinwerfer nach Anspruch 4, **dadurch gekennzeichnet, dass** die diffraktiven optischen Elemente in der Dünnschichtanordnung eingebettet sind.

7. Kraftfahrzeugscheinwerfer nach einem der Ansprüche 1 bis 6, **dadurch gekennzeichnet, dass** die diffraktiven optischen Elemente (105) wenigstens eine Freiformfläche aufweisen, und die ausgebildeten visuell erkennbaren Effekte für einen Betrachter als die wenigstens eine Freiformfläche erkennbar sind, wobei die Freiformfläche aus der Gruppe bestehend aus einer geometrischen Figur, eines alphanumerischen Zeichens, z.B. Logo, und/oder eines sonstigen gestalterischen Objekts wie z.B. eines Musters ausgewählt ist.

8. Kraftfahrzeugscheinwerfer nach einem der Ansprüche 1 bis 7, **dadurch gekennzeichnet, dass** die zumindest eine Weißlichtquelle (106) gleichzeitig eine Lichtquelle der Beleuchtungsformungseinheit ist, wobei bei eingeschalteter Lichtverteilung die an dem zumindest einen Bauteil (100) visuell erkennbaren Effekte für einen Betrachter von der Lichtverteilung unterscheidbar wahrnehmbar sind.

9. Kraftfahrzeugscheinwerfer nach einem der Ansprüche 1 bis 7, **dadurch gekennzeichnet, dass** die zumindest eine Weißlichtquelle eine eigenständige und von einer Lichtquelle der Beleuchtungsformungseinheit unabhängige Lichtquelle ist.

10. Kraftfahrzeugscheinwerfer nach einem der Ansprüche 1 bis 9, **dadurch gekennzeichnet, dass** die zumindest eine Weißlichtquelle eine LED, eine LED verbunden mit einem Lichtleiter oder eine Laserlichtquelle ist, oder **dass** die zumindest eine Weißlichtquelle aus mehreren LEDs oder Laserlichtquellen zusammengesetzt ist, die verschiedene Farben zur Erzeugung von Weißlicht durch additive Farbmischung aufweisen, oder dass die zumindest eine Weißlichtquelle aus einer oder mehreren Laserlichtquellen zusammengesetzt ist, wobei die einen oder mehreren Laserlichtquellen nicht sichtbares Licht, z.B. UV-Licht, oder blaues Licht emittieren, und wobei im Strahlengang zur Erzeugung von Weißlicht ein Konversionselement angeordnet ist, welches zumindest einen Teil des nicht sichtbaren Lichts oder des blauen Lichts in Weißlicht konvertiert.

11. Kraftfahrzeug umfassend zumindest einen Kraftfahrzeugscheinwerfer nach einem der Ansprüche 1 bis 10.

12. Kraftfahrzeug nach Anspruch 11, **dadurch gekennzeichnet, dass** außerhalb des zumindest einen Kraftfahrzeugscheinwerfers an zumindest einem Außenbereich (400) des Kraftfahrzeugs, vorzugsweise an der Kraftfahrzeugvorderfront (400), zumindest eine Weißlichtquelle (406) und diffraktive optische Elemente (405) angeordnet sind, wobei die zumindest eine Weißlichtquelle (406) dazu eingerichtet ist, Weißlicht in Richtung der diffraktiven optischen Elemente (405) zu emittieren, die diffraktiven optischen Elemente (405) dazu eingerichtet sind, das von der zumindest einen Weißlichtquelle (406) emittierte Weißlicht unter Ausbildung von an dem Außenbereich (400) des Kraftfahrzeugs visuell erkennbaren Effekten zu beugen, und der Außenbereich (400) des Kraftfahrzeugs, an dem die visuell erkennbaren Effekte ausgebildet werden, für einen außenstehenden Betrachter sichtbar ist, und dass die durch Beugung des Weißlichts durch die diffraktiven optischen Elemente (405) ausgebildeten visuell erkennbaren Effekte Farbeffekte sind.

## Claims

1. A motor vehicle headlamp, in the form of a front headlamp or in the form of a rear lamp, having at least one light shaping unit for producing at least one light distribution and at least one component (100) which comprises diffractive optical elements (105),
**characterized in that**
the at least one component (100) which comprises the diffractive optical elements (105) is a thick-walled optics having a light entry surface (101), a light exit surface (102) and a totally reflective outer surface (103), the diffractive optical elements (105) being arranged in lateral regions (104) of the totally reflective outer surface (103) with respect to the installed state of the motor vehicle headlamp in the motor vehicle;
the motor vehicle headlamp comprises at least one white light source (106) which is adapted to emit white light in the direction of the diffractive optical elements (105), the diffractive optical elements (105) are adapted to diffract the white light emitted by the at least one white light source (106) to form visually recognizable effects which are visible to an outside observer at the lateral regions of the lateral surface (103) of the thick-walled optics (100) wherein the diffractive optical elements (105) arranged in the lateral regions of the lateral surface (103) do not influence the light image obtained by the light distribution of the motor vehicle headlamp by the visually recognizable effects or do so to an extent which is not perceptible to an observer, and **in that** the visually recognizable effects formed by diffraction of the white light by the diffractive optical elements (105) are colour effects.

2. The motor vehicle headlamp according to claim 1, **characterized in that** the at least one component (100) which comprises the diffractive optical elements is a plastic component which is optionally provided at least in regions with a reflection-increasing coating.

3. The motor vehicle headlamp according to claim 2, **characterized in that** the diffractive optical elements (105) are present in the form of diffractive nanostructures which are molded or embossed into regions of the surface of the plastic component, the plastic component optionally being provided at least in regions with a reflection-increasing coating.

4. The motor vehicle headlamp according to claim 1 or 2, **characterized in that** the diffractive optical elements are applied to or embossed in a flexible carrier layer or are combined with a thin-film arrangement.

5. The motor vehicle headlamp according to claim 4, **characterized in that** the diffractive optical elements are in the form of diffractive nanostructures which are embossed on the surface of the flexible carrier layer.

6. The motor vehicle headlamp according to claim 4, **characterized in that** the diffractive optical elements are embedded in the thin-film arrangement.

7. The motor vehicle headlamp according to any one of claims 1 to 6, **characterized in that** the diffractive optical elements (105) comprise at least one free-form surface, and the formed visually recognizable effects are recognizable to an observer as the at least one free-form surface, wherein the free-form surface is selected from the group consisting of a geometric figure, an alphanumeric character, e.g., logo, and/or some other design object such as a pattern.

8. The motor vehicle headlamp according to any one of claims 1 to 7, **characterized in that** the at least one white light source (106) is at the same time a light source of the light shaping unit, wherein, when the light distribution is switched on, the effects that are visually recognizable on the at least one component (100) can be distinguished from the light distribution by an observer.

9. The motor vehicle headlamp according to any one of claims 1 to 7, **characterized in that** the at least one white light source is an independent light source independent of a light source of the light shaping unit.

10. The motor vehicle headlamp according to any one of claims 1 to 9, **characterized in that** the at least one white light source is an LED, an LED connected to a light guide, or a laser light source, or **in that** the at least one white light source is composed of a plurality of LEDs or laser light sources having different colours for generating white light by additive colour mixing, or **in that** the at least one white light source is composed of one or more laser light sources, the one or more laser light sources being non-visible light ,e.g.. UV light, or blue light, and wherein a conversion element is arranged in the beam path for generating white light, which conversion element converts at least part of the non-visible light or of the blue light into white light.

11. A motor vehicle comprising at least one motor vehicle headlamp according to any one of claims 1 to 10.

12. The motor vehicle according to claim 11, **characterized in that** at least one white light source (406) and diffractive optical elements (405) are arranged outside the at least one motor vehicle headlamp on at least one exterior region (400) of the motor vehicle, preferably on the motor vehicle front end (400), the at least one white light source (406) being adapted to emit white light in the direction of the diffractive optical elements (405), the diffractive optical elements (405) being adapted to diffract the white light emitted by the at least one white light source (406) to form visually recognizable effects at the exterior region (400) of the motor vehicle, and the exterior region (400) of the motor vehicle at which the visually recognizable effects are formed is visible to an outside observer, and **in that** the visually recognizable effects formed by diffraction of the white light by the diffractive optical elements (405) are colour effects.

## Revendications

1. Phare de véhicule automobile, en tant qu'un phare avant ou en tant qu'un feu arrière, comportant au moins une unité de formation d'éclairage, conçue pour générer au moins une répartition de lumière, et au moins un composant (100) comprenant des éléments optiques diffractifs (105),
**caractérisé en ce que**
ledit au moins un composant (100) comprenant les éléments optiques diffractifs (105), est une optique à paroi épaisse ayant une surface d'entrée de lumière (101), une surface de sortie de lumière (102) et une surface d'enveloppe à réflexion totale (103), les éléments optiques diffractifs (105) étant disposés dans des zones latérales (104) de la surface d'enveloppe à réflexion totale (103), par rapport à l'état monté du projecteur de véhicule automobile dans le véhicule automobile ;
le projecteur de véhicule automobile comprend au moins une source de lumière blanche (106) qui est conçue pour émettre de la lumière blanche en direction des éléments optiques diffractifs (105), les éléments optiques diffractifs (105) sont conçus pour diffracter la lumière blanche émise par ladite au moins une source de lumière blanche (106) en formant des effets visibles et visuellement reconnaissables pour un observateur extérieur sur les zones latérales de la surface d'enveloppe (103) de l'optique à paroi épaisse (100), l'image lumineuse qui est obtenue par la répartition de la lumière du projecteur de véhicule automobile n'étant pas influencée par les effets visuellement reconnaissables ou n'étant influencée que dans une mesure non perceptible pour un observateur, grâce aux éléments optiques diffractifs (105) disposés dans les zones latérales de la surface d'enveloppe (103), et les effets visuellement reconnaissables qui sont formés par diffraction de la lumière blanche par les éléments optiques diffractifs (105) étant des effets de couleur.

2. Phare de véhicule automobile selon la revendication 1, **caractérisé en ce que** ledit au moins un composant (100) comprenant les éléments optiques diffractifs est un composant en matière plastique pourvu au moins par zones, facultativement, d'un revêtement pour augmenter la réflexion.

3. Phare de véhicule automobile selon la revendication 2, **caractérisé en ce que** les éléments optiques diffractifs (105) se présentent sous la forme de nanostructures diffractives qui sont moulées ou imprimées dans des zones de la surface du composant en matière plastique, le composant en matière plastique étant pourvu au moins par zones, facultativement, d'un revêtement pour augmenter la réflexion.

4. Projecteur de véhicule automobile selon la revendication 1 ou 2, **caractérisé en ce que** les éléments optiques diffractifs sont appliqués sur ou imprimés dans une couche de support flexible ou sont combinés avec un agencement de couches minces.

5. Projecteur de véhicule automobile selon la revendication 4, **caractérisé en ce que** les éléments optiques diffractifs se présentent sous la forme de nanostructures diffractives qui sont imprimées sur la surface de la couche de support flexible.

6. Projecteur de véhicule automobile selon la revendication 4, **caractérisé en ce que** les éléments optiques diffractifs sont incorporés dans le dispositif à couche mince.

7. Projecteur de véhicule automobile selon l'une quelconque des revendications 1 à 6, **caractérisé en ce que** les éléments optiques diffractifs (105) présentent au moins une surface de forme libre, et les effets visuellement reconnaissables formés sont reconnaissables pour un observateur en tant qu'au moins une surface de forme libre, la surface de forme libre étant choisie dans le groupe constitué d'une figure géométrique, d'un caractère alphanumérique, par exemple un logo, et/ou d'un autre objet de conception, comme par exemple un motif.

8. Projecteur de véhicule automobile selon l'une quelconque des revendications 1 à 7, **caractérisé en ce que** ladite au moins une source de lumière blanche (106) est aussi une source de lumière de l'unité de mise en forme de l'éclairage, les effets visuellement reconnaissables sur ledit au moins un composant (100) pouvant être perçus par un observateur comme distincte de la distribution de lumière lorsque la distribution de lumière est activée.

9. Projecteur de véhicule automobile selon l'une quelconque des revendications 1 à 7, **caractérisé en ce que** ladite au moins une source de lumière blanche est une source de lumière autonome et indépendante d'une source de lumière de l'unité de formation d'éclairage.

10. Projecteur de véhicule automobile selon l'une quelconque des revendications 1 à 9, **caractérisé en ce que** ladite au moins une source de lumière blanche est une LED, une LED reliée à un guide de lumière ou une source de lumière laser, ou **en ce que** ladite au moins une source de lumière blanche est composée de plusieurs LED ou sources de lumière laser ayant divers couleurs pour la production de lumière blanche par mélange additif des couleurs, ou **en ce que** ladite au moins une source de lumière blanche est composée d'une source de lumière ou de plusieurs sources de lumière laser, ladite ou lesdites sources de lumière laser émettant de la lumière non visible, par exemple de la lumière UV ou de la lumière bleue, et un élément de conversion qui convertit au moins une partie de la lumière non visible ou de la lumière bleue en lumière blanche étant disposé sur le trajet des rayons pour produire de la lumière blanche.

11. Véhicule automobile comprenant au moins un projecteur de véhicule automobile selon l'une quelconque des revendications 1 à 10.

12. Véhicule automobile selon la revendication 11, **caractérisé en ce que**, à l'extérieur dudit au moins un projecteur de véhicule automobile sur au moins une zone extérieure (400) du véhicule automobile, de préférence sur l'avant (400) du véhicule automobile, il y a au moins une source de lumière blanche (406) et des éléments optiques diffractifs (405), ladite au moins une source de lumière blanche (406) étant agencée pour émettre de la lumière blanche en direction des éléments optiques diffractifs (405), lesdits éléments optiques diffractifs (405) étant agencés pour diffracter la lumière blanche émise par ladite au moins une source de lumière blanche (406) en formant des effets visuellement reconnaissables sur la zone extérieure (400) du véhicule automobile, et la zone extérieure (400) du véhicule automobile, sur laquelle les effets visuellement reconnaissables sont formés, étant visible pour un observateur extérieur, et les effets visuellement reconnaissables formés par diffraction de la lumière blanche par les éléments optiques diffractifs (405) étant des effets de couleur.
